# DEMANDE DE BREVET EUROPEEN

(11) **EP 2 371 626 A1**
(43) Date de publication de la demande: **05.10.2011**
(21) Numéro de dépôt: 11152126.6
(22) Date de dépôt: 25.01.2011
(51) Int. Cl.: B60R 5/00, B60R 7/04, B60R 13/01, B60N 2/30, B60N 2/36

(54) **Habitacle de véhicule automobile**

(30) Priorité: 29.03.2010 FR 1052279
(71) Demandeur: Peugeot Citroën Automobiles SA, 78140 Vélizy-Villacoublay (FR)
(72) Inventeur: Bertrand Belanger, Pascal, 78280, GUYANCOURT (FR)

(57) **Abrégé**

L'invention se rapporte à un habitacle de véhicule automobile (1) comprenant une rangée (9) de sièges à l'arrière, un tableau de bord (5) à l'avant et une plateforme (11) fixée à l'une de ses extrémités (25) au niveau de la rangée de sièges arrière, la plateforme étant mobile entre une position escamotée (A) sur la rangée de sièges arrière et une position déployée (D) dans l'habitacle dans laquelle elle est en appui sur les sièges de façon à former une surface de chargement. Selon l'invention, la plateforme (11) en position déployée (D) s'étend jusqu'à la planche de bord (5) de façon à former une surface continue de chargement sur toute la longueur de l'habitacle (3).

L'invention trouve son application notamment dans le domaine des plateformes escamotables pour habitacle de véhicule automobile.

## Description

L'invention concerne l'habitacle d'un véhicule automobile comprenant une plateforme de chargement.

Les véhicules automobiles permettent notamment de transporter des objets. A cet effet, une zone de stockage leur est spécialement dédiée dans la zone de coffre. Cette zone de coffre comprend un volume limité et ne permet d'embarquer qu'une quantité limitée d'objets. Il est possible également de stocker des objets sur les sièges arrière, même si ceux-ci ne leur sont pas spécifiquement dédiés. Néanmoins, cette solution n'est pas optimale. En effet, des objets longs ou volumineux qui dépassent la capacité de stockage de la zone de coffre ou celle des sièges arrière ne peuvent pas être transportés dans le véhicule.

Pour remédier à cet inconvénient, certains véhicules proposent une certaine modularité. Les véhicules comprennent des sièges dont le dossier est rabattable sur l'assise par un mouvement de rotation de telle sorte que la face avant du dossier se retrouve contre la surface de l'assise. De cette manière, la zone de stockage du coffre se trouve agrandie.

Selon un premier état de l'art décrit dans le document US 2002/0043815, un véhicule automobile comprend trois rangées de sièges dont le dossier est rabattable sur l'assise. Le véhicule est en outre équipé d'un panneau escamotable contre les dossiers de la rangée de sièges arrière et monté mobile en rotation sur le bord supérieur de la rangée de sièges arrière. Lorsque les dossiers de la rangée arrière et de la rangée intermédiaire sont rabattus, le panneau peut se déplier sur la rangée intermédiaire pour former une surface de chargement (comprise entre la rangée de sièges arrière et la rangée de sièges intermédiaire). Le véhicule dispose ainsi d'une surface de chargement dont la longueur correspond à la distance entre le bord arrière de la zone de coffre et les dossiers de la rangée de sièges avant et dont la largeur correspond à la largeur de l'habitacle du véhicule. Ce premier état de l'art ne permet pas de transporter des objets plus longs que la longueur de la surface de chargement.

Selon un second état de l'art décrit dans le document FR 2 914 887, un véhicule automobile comprend deux rangées de sièges. La rangée arrière est équipée, comme dans le premier art antérieur d'un panneau escamotable contre les dossiers de la rangée arrière et monté mobile en rotation sur le bord supérieur de cette rangée de sièges. Le panneau peut être déplié de façon à être en appui sur le bord supérieur de la rangée de sièges avant. De cette manière, des objets longs peuvent être transportés car ils peuvent aller au-delà du dossier de la rangée de sièges avant.

La surface de chargement est comprise entre les dossiers de la rangée de sièges arrière et le dossier du siège passager avant. Cette surface est donc relativement limitée et ne permet pas d'embarquer des objets de petite taille à côté du siège du conducteur, ni des objets qui ont une hauteur supérieure à la distance entre la surface de chargement et le plafond du véhicule.

Le but de la présente invention est de proposer une surface de chargement améliorée pouvant embarquer indifféremment des objets ayant une longueur approchant la longueur du véhicule et des objets plus courts sans que ceux-ci ne risquent de tomber sur le plancher du véhicule, notamment près du conducteur sur une certaine hauteur.

A cet effet, l'invention se rapporte à un habitacle de véhicule automobile comprenant une rangée de sièges à l'arrière, un tableau de bord à l'avant et une plateforme fixée à l'une de ses extrémités au niveau de la rangée de sièges arrière, la plateforme étant mobile entre une position escamotée sur la rangée de sièges arrière et une position déployée dans l'habitacle dans laquelle elle est en appui sur les sièges de façon à former une surface de chargement caractérisé en ce que la plateforme en position déployée s'étend jusqu'à la planche de bord de façon à former une surface continue de chargement sur toute la longueur de l'habitacle.

Le véhicule dispose alors, quand la plateforme est déployée, d'une surface de chargement améliorée. Celle-ci peut se conformer au véhicule de façon à couvrir l'espace du véhicule à l'arrière et sur la partie droite à l'avant. Cela évite aux objets qui sont transportés de tomber sur les côtés.

De façon avantageuse, l'extrémité libre de la plateforme en position déployée est solidarisée à la planche de bord.

Préférentiellement, la plateforme comprend des panneaux repliables entre eux et mobiles entre la position escamotée dans laquelle les panneaux sont repliés contre la rangée de sièges arrière et la position déployée dans laquelle les panneaux sont dépliés le long de l'habitacle.

Le fait d'avoir différents panneaux implique que la surface de chargement n'est pas nécessairement plane, s'adaptant aux points d'appui formés par les dossiers des sièges, tout en ayant tout de même une surface rigide pour porter les objets.

La plateforme comprend avantageusement trois panneaux dont la longueur correspond sensiblement à la hauteur d'un dossier de siège.

Cette longueur de panneau permet d'effectuer un meilleur escamotage de la plateforme, celle-ci s'intégrant parfaitement à l'arrière de la rangée de sièges arrière.

La plateforme en position déployée est de préférence en appui sur les dossiers rabattus des sièges sur les assises.

Cette configuration permet de disposer d'un espace de chargement plus haut que si la plateforme repose uniquement sur le bord supérieur des dossiers de siège lorsque ceux-ci ne sont pas rabattus. Cela permet donc de transporter des objets relativement hauts.

La planche de bord comprend avantageusement un logement dans la cavité duquel lequel l'extrémité libre de la plateforme peut se solidariser.

De cette façon, la plateforme est en appui dans le logement, rendant ainsi la plateforme plus stable. En outre, la surface de chargement est prolongée par la cavité à l'intérieur du logement.

La plateforme est de préférence escamotée contre la surface arrière des dossiers de la rangée arrière de sièges.

L'extrémité de la plateforme fixée à la rangée de sièges arrière est de façon avantageuse mobile en rotation autour du bord inférieur du dossier.

Une première portion de la plateforme a de préférence une largeur sensiblement égale à la largeur d'une rangée de sièges et en ce qu'une deuxième portion de la plateforme a une largeur sensiblement égale à la largeur d'un siège.

La première portion se déploie sur les deux tiers de la longueur totale de la plateforme et la deuxième portion se déploie sur le tiers de ladite longueur.

D'autres particularités et avantages ressortiront clairement de la description qui en est faite ci-après, à titre indicatif et nullement limitatif, en référence aux dessins annexés, dans lesquels :
- la figure 1 est une vue schématique de côté en coupe d'un véhicule automobile avec une plateforme escamotée ;
- la figure 2 est une vue schématique de côté en coupe d'un véhicule automobile avec une plateforme déployée portant des objets ;
- la figure 3 est une vue schématique de côté en coupe d'un véhicule automobile avec une plateforme déployée montrant la surface effective de chargement ;

- la figure 4 est une vue en perspective de la plateforme partiellement pliée ;
- la figure 5 est vue arrière en perspective de la rangée de sièges arrière avec une plateforme escamotée contre les dossiers ;
- la figure 6 est une vue de côté des dossiers de la rangée de sièges arrière avec une plateforme en position escamotée ;
- la figure 7 montre une charnière entre deux panneaux de la plateforme ;
- la figure 8 est une vue en perspective du siège avant et de la rangée de sièges arrière dont les dossiers sont rabattus sur les assises et sur lesquels repose la plateforme en position déployée ;
- la figure 9 est une vue schématique de dessus de l'intérieur d'un véhicule avec une plateforme escamotée ;
- la figure 10 est une vue schématique de dessus de l'intérieur d'un véhicule avec une plateforme en cours de déploiement ;
- la figure 11 est une vue schématique de dessus de l'intérieur d'un véhicule avec une plateforme en cours de déploiement ;
- la figure 12 est une vue schématique de dessus de l'intérieur d'un véhicule avec une plateforme déployée.

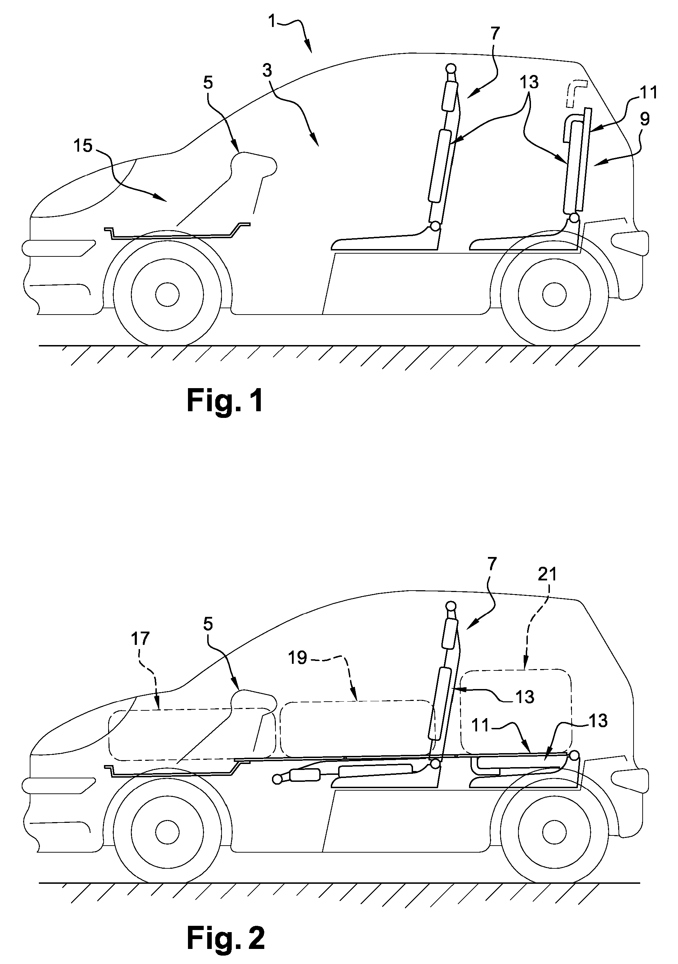

La figure 1 montre un véhicule automobile 1 comprenant dans son habitacle 3 : une planche de bord 5, une première rangée 7 de sièges à l'avant du véhicule, une deuxième rangée 9 de sièges à l'arrière du véhicule et une plateforme 11 escamotée contre la rangée 9 de sièges à l'arrière.

La figure 2 montre un véhicule automobile selon la figure 1 dans laquelle les dossiers 13 de siège sont rabattus sur l'assise et la plateforme 11 est déployée et s'étend depuis la rangée 9 de sièges arrière jusqu'à l'intérieur de la planche de bord 5. A cet effet, la planche de bord 5 comprend un logement 15. La plateforme 11 forme ainsi une surface de chargement continue de la rangée 9 de sièges arrière jusqu'à l'avant du véhicule 1. Sur la figure 2, trois objets 17, 19, 21 sont chargés sur la plateforme 11 déployée.

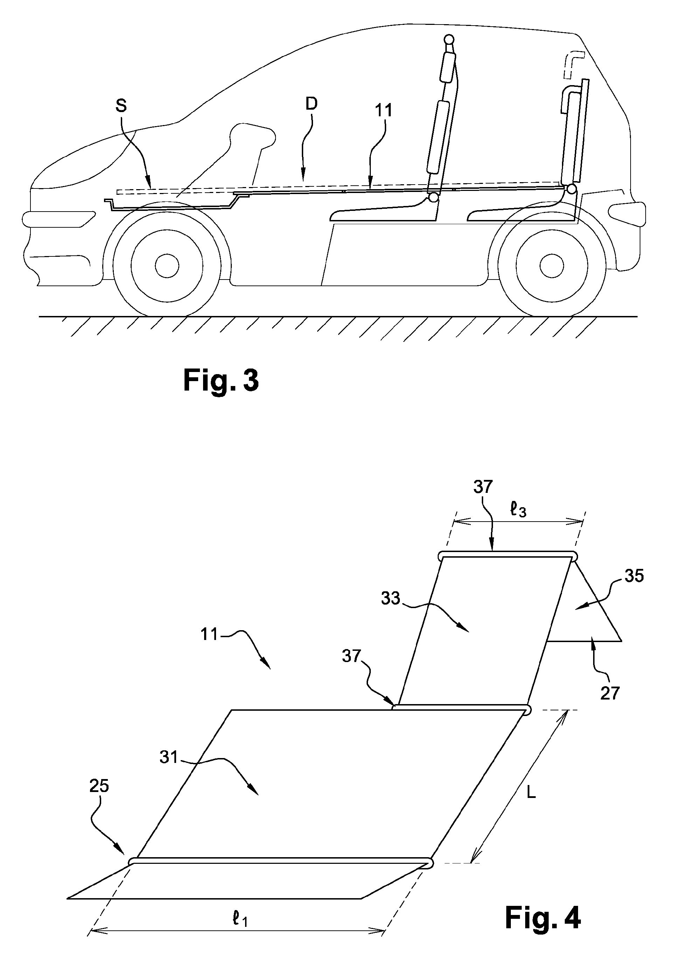

La figure 3 montre un véhicule automobile selon la figure 2 avec la plateforme 11 en position déployée D. La surface de chargement effective S est représentée en traits discontinus.

La rangée 9 de sièges arrière comprend au moins deux assises. Cette rangée 9 peut se présenter soit sous la forme de deux sièges distincts, soit sous la forme d'une banquette. La rangée de sièges arrière comprend des assises et des dossiers 13 qui peuvent être rabattus sur les assises par une liaison pivot qui permet aux dossiers de basculer vers l'avant en tournant autour de l'axe formé par la jonction de l'assise et du dossier.

La rangée 7 de sièges avant comprend deux assises et deux dossiers 13 distincts l'un de l'autre. Le siège passager comprend une assise et un dossier rabattable sur l'assise.

Il est donc possible de rabattre les deux sièges à l'arrière et le siège passager à l'avant.

Le tableau de bord 5 est situé à l'avant du véhicule. Il comprend un logement dans lequel se trouve une cavité. La cavité peut servir d'appui à l'extrémité libre de la plateforme lorsque celle-ci est en position déployée.

La figure 4 montre la plateforme seule en position déployée.

La plateforme 11 a une forme générale de parallélogramme. La plateforme 11 est allongée et comprend deux extrémités : une extrémité fixe 25 et une extrémité libre 27.

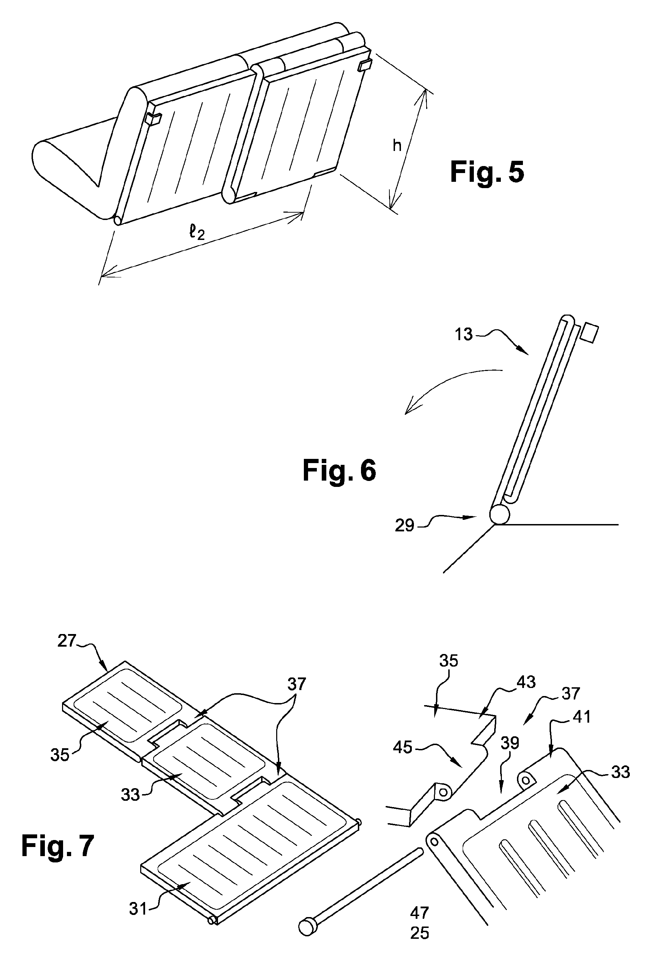

La plateforme est montée mobile en rotation à l'une des son extrémité 25 au bord inférieur 29 des dossiers 13 de la rangée de sièges arrière (figure 6). Son autre extrémité 27 est libre.

La plateforme 11 comprend trois panneaux repliables entre eux. Ils sont réalisés dans un matériau plastique moulé.

Les trois panneaux ont une longueur L sensiblement équivalente à la hauteur h des dossiers de la rangée de sièges arrière (figures 4 et 5). Un premier panneau 31 a une largeur l1 (figure 4) sensiblement équivalente à la largeur l2 (figure 5) des dossiers 13 de la rangée de sièges arrière. Un deuxième panneau 33 et un troisième 35 panneau ont une largeur l3 au moins équivalente, voire supérieure à la largeur l4 du dossier du siège rabattable de la rangée 7 avant.

Les panneaux sont reliés entre eux deux à deux par une charnière 37 visible plus particulièrement sur la figure 7.

Le panneau 33 comprend un évidement 39 sur son bord 41 et le deuxième panneau 35 comprend une excroissance 45 également sur son bord 43. L'évidement 39 et l'excroissance 45 peuvent coopérer par emboîtement. Les deux panneaux ont par ailleurs, lorsqu'ils sont assemblés, un axe creux. Une tige 47 est introduite dans cet axe creux de façon à solidariser les deux panneaux et à les rendre mobiles en rotation l'un par rapport à l'autre autour de l'axe.

De façon alternative non illustrée, les panneaux pourraient également être assemblés par l'intermédiaire d'un film en tissu par exemple qui autoriserait le pliage des panneaux les uns sur les autres.

La surface des panneaux peut être recouverte d'un matériau dont le coefficient de frottement est plus élevé que celui du matériau plastique dans lequel il est constitué. Ceci permet d'éviter que les objets ne glissent sur la surface de la plateforme lors du transport. Le revêtement peut être par exemple de la moquette.

La façon dont la plateforme se déploie et s'escamote va à présent être présentée.

Lorsque la plateforme est initialement dans sa position escamotée A selon les figures 5, 6 et 9, les panneaux sont repliés contre le dossier 13 de la rangée 9 des sièges arrière.

La surface du premier panneau se trouve contre la surface des dossiers de la rangée de sièges arrière. Le premier panneau 31 est mobile en rotation sur le bord inférieur 29 des dossiers 13 au niveau de l'extrémité 25 de la plateforme 11. Le deuxième panneau 33 est relié par une liaison charnière 37 au premier panneau 31. Le deuxième panneau 33 est replié contre le premier panneau 31. Le troisième panneau 35 est relié par une autre liaison charnière 37 au deuxième panneau. Le troisième panneau 35 est replié contre le deuxième panneau 33.

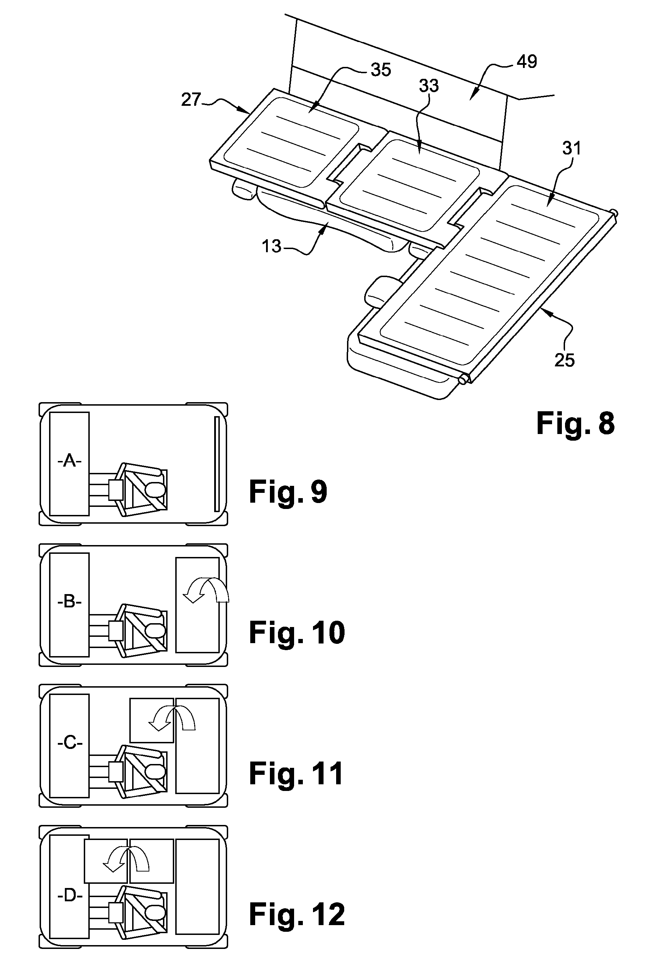

Lorsqu'un utilisateur souhaite disposer de la surface de chargement améliorée, il rabat les dossiers 13 des sièges arrière sur l'assise ainsi que le dossier 13 du siège avant. Le premier panneau 31 tourne en même temps que les dossiers 13 de la rangée 9 arrière et se trouve donc déjà en position horizontale de telle sorte que la plateforme 11 se trouve dans une première position intermédiaire B illustrée sur la figure 10.

Puis, l'utilisateur déplie le deuxième panneau 33 sur le dossier 13 rabattu du siège avant jusqu' à se trouver dans une première position intermédiaire C illustrée sur la figure 11.

Ensuite, l'utilisateur déplie le troisième panneau 35 à l'avant du siège avant jusqu'au tableau de bord 5 jusqu'à ce que la plateforme 11 soit en position déployée D conformément aux figures 2, 3, 8 et 12.

Conformément à la figure 12, lorsque la plateforme 11 est déployée D, le deuxième panneau 33 et le troisième panneau 35 couvrent la surface disponible de telle sorte que l'espace entre ces panneaux 33, 35 et la portière 49 est comblé. De cette manière, des objets ne risquent pas de tomber dans un interstice et devenir ainsi inaccessible au conducteur.

Inversement, pour escamoter la plateforme, l'utilisateur replie les trois panneaux et relève les dossiers du siège avant et des sièges arrière.

Pour permettre de maintenir les panneaux en position escamotée, il est possible de prévoir des moyens de maintien comme par exemple des aimants ou une cale visible sur les figures 9 et 10.

Cette invention peut trouver une application intéressante dans le domaine des livraisons de colis ou d'acheminement du courrier. En effet, un livreur ou un facteur pourra tirer profit d'une plateforme de chargement à laquelle il peut avoir accès depuis son siège de conducteur et sur laquelle il peut placer une bonne quantité d'objets tels que des colis. Pour la distribution du courrier également, les lettres étant classées dans des boîtiers de rangement, le facteur peut facilement extraire le courrier d'un destinataire et le déposer dans la boîte aux lettres sans avoir à sortir de son véhicule.

Le fait que la plateforme puisse se prolonger dans la planche de bord permet d'utiliser des boîtiers plus longs et donc d'une plus grande capacité.

## Revendications

1. Habitacle de véhicule automobile (1) comprenant une rangée (9) de sièges à l'arrière, un tableau de bord (5) à l'avant et une plateforme (11) fixée à l'une de ses extrémités (25) au niveau de la rangée de sièges arrière, la plateforme étant mobile entre une position escamotée (A) sur la rangée de sièges arrière et une position déployée (D) dans l'habitacle dans laquelle elle est en appui sur les sièges de façon à former une surface de chargement **caractérisé en ce que** la plateforme (11) en position déployée (D) s'étend jusqu'à la planche de bord (5) de façon à former une surface continue de chargement sur toute la longueur de l'habitacle (3).

2. Habitacle de véhicule automobile selon la revendication 1 **caractérisé en ce que** l'extrémité libre (27) de la plateforme (11) en position déployée (D) est solidarisée à la planche de bord (5).

3. Habitacle de véhicule automobile selon l'une quelconque des revendications 1 ou 2 **caractérisé en ce que** la plateforme (11) comprend des panneaux repliables entre eux et mobiles entre la position escamotée (A) dans laquelle les panneaux sont repliés contre la rangée (9) de sièges arrière et la position déployée (D) dans laquelle les panneaux sont dépliés le long de l'habitacle.

4. Habitacle selon la revendication 3 **caractérisé en ce que** la plateforme (11) comprend trois panneaux (31,33,35) dont la longueur (L) correspond sensiblement à la hauteur (h) d'un dossier (13) de siège.

5. Habitacle selon l'une quelconque des revendications précédentes **caractérisé en ce que** la plateforme (11) en position déployée (D) est en appui sur les dossiers rabattus des sièges sur les assises.

6. Habitacle selon la revendication 5 **caractérisé en ce que** la planche de bord (5) comprend un logement (15) dans la cavité duquel lequel l'extrémité libre (27) de la plateforme (11) peut se solidariser.

7. Habitacle selon l'une quelconque des revendications précédentes **caractérisé en ce que** la plateforme (11) est escamotée contre la surface arrière des dossiers de la rangée (9) arrière de sièges.

8. Habitacle selon l'une quelconque des revendications précédentes **caractérisé en ce que** l'extrémité (25) de la plateforme fixée à la rangée de sièges arrière est mobile en rotation autour du bord inférieur (29) du dossier.

9. Habitacle selon l'une quelconque des revendications précédentes **caractérisé en ce qu'**une première portion de la plateforme a une largeur (11) sensiblement égale à la largeur (12) d'une rangée de sièges et **en ce qu'**une deuxième portion de la plateforme a une largeur (13) sensiblement égale à la largeur (14) d'un siège.

10. Habitacle selon la revendication 9 **caractérisé en ce que** la première portion se déploie sur les deux tiers de la longueur totale de la plateforme (11) et la deuxième portion se déploie sur le tiers de ladite longueur.
